# EUROPÄISCHE PATENTSCHRIFT

(11) **EP 3 814 657 B1**
(45) Veröffentlichungstag und Bekanntmachung des Hinweises auf die Patenterteilung: **06.11.2024**
(21) Anmeldenummer: 19735210.7
(22) Anmeldetag: 24.06.2019
(51) Int. Cl.: F16H 57/032

(54) **GETRIEBE MIT GEHÄUSETEIL UND VERFAHREN ZUM HERSTELLEN EINES GETRIEBES**
TRANSMISSION HAVING A HOUSING PART AND METHOD FOR PRODUCING A TRANSMISSION
ENGRENAGE COMPRENANT UNE PARTIE DE BOÎTIER ET PROCÉDÉ DE FABRICATION D'UN ENGRENAGE

(30) Priorität: 27.06.2018 DE 102018005083
(43) Veröffentlichungstag der Anmeldung: 05.05.2021
(73) Patentinhaber: SEW-EURODRIVE GmbH & Co. KG, 76646 Bruchsal (DE)
(72) Erfinder: MORITZ, Thorsten, 76698 Ubstadt-Weiher (DE); WIECZOREK, Dorothee, 74015 Bretten (DE)
(86) Internationale Anmeldenummer: PCT/EP2019/025198
(87) Internationale Veröffentlichungsnummer: WO 2020/001813

(56) Entgegenhaltungen:
- EP-A1- 1 582 775
- DE-A1- 102007 014 707
- DE-A1- 102012 001 388
- DE-A1- 102013 012 718

## Beschreibung

Die Erfindung betrifft ein Getriebe mit Gehäuseteil und Verfahren zum Herstellen eines Getriebes.

Aus der EP 1 733 153 B1 ist ein Stirnradgetriebe bekannt.

**Aus der** DE 10 2007 014 707 A1 **ist ein Getriebe bekannt.**

**Aus der** DE 10 2013 012 718 A1 **ist ein Getriebe mit einem Gehäuseteil bekannt.**

**Aus der** EP 1 582 775 A1 **ist als nächstliegender Stand der Technik ein Getriebegehäuse bekannt.**

**Aus der** DE 10 2012 001 388 A1 **ist ein Getriebe mit einem zentralen Gehäuseteil bekannt.**

Beim Herstellen eines Druckgussteils ist bekannt, die Formgebung mittels zwei Gusswerkzeugen, also Formwerkzeugen, auszuführen, welche beim Entformen in einer ersten Ziehrichtung relativ auseinander bewegt werden. Weitere Formwerkzeuge, welche beim Entformen in einer anderen Ziehrichtung herausgezogen werden, welche unterschiedlich ist von der ersten Ziehrichtung, werden im Folgenden der Einfachheit halber als Schieber bezeichnet.

Vorzugsweise wird mit den Gusswerkzeugen die äußere Kontur des Druckgussteils erzeugt.

Der Erfindung liegt daher die Aufgabe zugrunde, ein Getriebe einfach herstellbar und kostengünstig weiterzubilden.

Erfindungsgemäß wird die Aufgabe bei dem Getriebe nach den in Anspruch 1 und bei dem Verfahren nach den in Anspruch 4 angegebenen Merkmalen gelöst.

Wichtige Merkmale der Erfindung bei dem Getriebe mit Gehäuseteil sind, dass das Gehäuseteil ein Gussteil ist, insbesondere ein Druckgussteil, insbesondere ein Aluminium-Druckgussteil,
wobei das Gehäuseteil durch zwei Formwerkzeuge erzeugt ist, welche beim Entformen in einer ersten Ziehrichtung relativ auseinander bewegt werden,
wobei das Gehäuseteil eine insbesondere als Beabstandung fungierende Zwischenwand infolge eines Mindestabstandes der beiden Formwerkzeuge aufweist.

Von Vorteil ist dabei, dass auf diese Weise ein sehr geringes Ölvolumen im Getriebe erreichbar ist. Denn mittels der beiden Formwerkzeuge werden möglichst große Taschen oder Wannen im Gehäuseteil erzeugbar, welche der Kontur der Verzahnungsteile, insbesondere des abtreibenden Zahnrads möglichst eng folgen. Auf diese Weise ist ein geringes Ölvolumen erreichbar. Ein Berühren der beiden Formwerkzeuge ist trotzdem vermieden und stattdessen eine Zwischenwand materialsparend vorhanden. Die Zwischenwand ist sehr dünn ausführbar, da keine tragende Funktion ausgeführt werden muss sondern nur die beiden Formwerkzeuge separat zu halten sind.

Der äußere rechteckförmige oder quaderförmige Rahmen ist durch ein darin befindliches Kreuz stabilisierbar, in dessen Mittelpunkt die Lageraufnahme für ein Lager der abtreibenden Welle anordenbar ist. Vorzugsweise ist diese Lageraufnahme auch beabstandet von der Unterseite, also von den Fußflächen und nur über eine Rippe mit der Unterseite verbunden.

In der Zwischenwand können insbesondere als Gießblatt fungierende räumlich begrenzte Verjüngungen der Wand vorgesehen werden, welche hier als Knockout bezeichnet werden. Mittels der Knockouts ist ein einfaches Schaffen einer Abflussmöglichkeit für Flüssigkeiten, wie Wasser oder Öl erreicht, die sich in der Vertiefung sammeln könnten. Dabei ist für das Entfernen der Knockouts nur ein Schlagwerkzeug notwendig, also kein Bohrwerkzeug.

Die Zwischenwand ist eben ausgeformt und die Ziehrichtung ist parallel zur Normalenrichtung der Ebene, insbesondere Mittelebene, der Zwischenwand ausgerichtet. Von Vorteil ist dabei, dass die Zwischenwand einem Gießblatt entsprechend vorgesehen ist. Somit ist nur wenig Material für die Zwischenwand aufzuwenden und trotzdem ist die Abnutzung der beiden Formwerkzeuge verringerbar. Denn bei Berührung wäre eine hohe Abnutzung der beiden Formwerkzeuge vorhanden.

Bei einer vorteilhaften Ausgestaltung beträgt die Wandstärke der Zwischenwand zwischen einem und zehn Millimetern. Von Vorteil ist dabei, dass wenig Material notwendig ist und trotzdem die Abnutzung der beiden Formwerkzeuge verringerbar ist. Da die Wandstärke gering ist, ist ein Entfernen von Knockouts mit noch geringerem Aufwand erreichbar.

Bei einer vorteilhaften Ausgestaltung weist das Gehäuseteil eine sich in Ziehrichtung erstreckende Rippe auf, welche eine Lageraufnahme eines Lagers der abtreibenden Welle des Getriebes mit einer Unterseite eines äußeren Rahmens des Gehäuseteils verbindet, insbesondere wobei die senkrechte Projektion des Rahmens in Richtung der Ziehrichtung im Wesentlichen rechteckförmig ist. Von Vorteil ist dabei, dass die Unterseite, also eine Fußfläche aufweisende Seite des äußeren Rahmens, beabstandbar ist von der Lageraufnahme. Somit ist eine in Umfangsrichtung um die abtreibende Welle herum quasi punktförmige Einleitung von Drehmoment in die Fußfläche durch die Rippe hindurch ermöglicht.

Bei einer vorteilhaften Ausgestaltung ist die Lageraufnahme mittels einer weiteren Lageraufnahme, welche ein Lager einer Zwischenwelle des Getriebes aufnimmt, mit der Oberseite des äußeren Rahmens verbunden. Von Vorteil ist dabei, dass die Lageraufnahme der abtreibenden Welle wiederum beabstandet ist von der Oberseite. Darüber hinaus ist wiederum eine in Umfangsrichtung um die abtreibende Welle herum quasi punktförmige Einleitung von Drehmoment in die Oberseite durch die weitere Lageraufnahme hindurch ermöglicht.

**Erfindungsgemäß** ist die Lageraufnahme mittels eines Verdickungsbereichs mit einer Seitenfläche des äußeren Rahmens verbunden. Von Vorteil ist dabei, dass eine um die abtreibende Welle herum quasi punktförmige Einleitung von Drehmoment in die Fußflächen aufweisende Seitenfläche durch den Verdickungsbereich hindurch ermöglicht ist.

**Erfindungsgemäß** ist die Lageraufnahme mittels eines Flanschbereichs mit einer Seitenfläche des äußeren Rahmens verbunden. Von Vorteil ist dabei, dass eine eintriebsseitige steife Anbindung ausgeführt ist.

**Erfindungsgemäß** ist das Getriebe ein Winkelgetriebe. Von Vorteil ist dabei, dass die beiden Formwerkzeuge und - insbesondere zwei - weitere Formwerkzeuge, also Schieber, zur Entformung des Getriebegehäuses notwendig sind. Somit sind die eintreibende Seite und der Gehäuseinnenraum separat von der abtreibenden Seite und deren Spiegelbild entformbar.

**Erfindungsgemäß** ist der Flanschbereich zum Verbinden mit einem die eintreibende Welle des Getriebes antreibenden Elektromotor, vorgesehen. Von Vorteil ist dabei, dass die eintreibende Welle senkrecht zur abtreibenden Welle ausgerichtet ist.

Bei einer vorteilhaften Ausgestaltung ist der Gehäuseteil mit einer weiteren Gehäuseöffnung zur Montage der Zahnräder und Wellen vorgesehen. Von Vorteil ist dabei, dass die Gehäuseöffnung durch die Anordnung der Formwerkzeuge insbesondere mit dem Schieber für den Innenraum so ausgestaltbar ist, dass die entsprechende Seite des äußeren Rahmens des Getriebes sehr steif ausführbar ist.

Wichtige Merkmale bei dem Verfahren zum Herstellen eines Getriebes sind, dass das Getriebe ein Gehäuseteil aufweist, das als Druckgussteil aus einem Gussmaterial, insbesondere Aluminium, gefertigt wird,
wobei zwischen zwei Formwerkzeugen, insbesondere beim Druckgießen, Gussmaterial als Zwischenwand, insbesondere als Beabstandung der beiden Formwerkzeuge, angeordnet ist, insbesondere mit einer Wandstärke zwischen 1 und 10 Millimeter,
wobei beim Entformen des als Druckgussteil hergestellten Gehäuseteils die Formwerkzeuge relativ voneinander wegbewegt werden, insbesondere in einer ersten Ziehrichtung,
insbesondere wobei die erste Ziehrichtung parallel zur Drehachse der abtreibenden Welle des Getriebes gerichtet ist.

Von Vorteil ist dabei, dass eine sehr dünne Zwischenwand erzeugbar ist, welche zwischen den beiden Formwerkzeugen infolge deren Beabstandung erzeugt wird. Somit ist die Abnutzung der Formwerkzeuge verringerbar.

Bei einer vorteilhaften Ausgestaltung werden nach dem Herausziehen der beiden Formwerkzeuge Knockouts entfernt, insbesondere herausgeschlagen. Von Vorteil ist dabei, dass die Knockouts ohne großen Aufwand entfernbar sind und somit eine Abflussmöglichkeit für Flüssigkeiten erreicht ist.

Bei einer vorteilhaften Ausgestaltung wird beim Entformen des als Druckgussteil hergestellten Gehäuseteils ein weiteres, insbesondere drittes, Formwerkzeug senkrecht zur ersten Ziehrichtung herausgezogen, insbesondere zur Erzeugung der Lageraufnahme für ein Lager der eintreibenden Welle,
insbesondere welcher von beiden Formwerkzeugen beabstandet ist. Von Vorteil ist dabei, dass mittels dreier Formwerkzeuge die abtreibende Seite, die dazu gegenüberliegende Seite und die eintreibende Seite ausformbar sind. Somit ist der eintreibende Bereich als Hohlflanschteil ausformbar und daher die entsprechende Seite des äußeren Rahmens des Getriebes sehr steif ausführbar.

Bei einer vorteilhaften Ausgestaltung wird beim Entformen des als Druckgussteil hergestellten Gehäuseteils ein viertes Formwerkzeug senkrecht zur ersten Ziehrichtung herausgezogen, insbesondere zur Erzeugung des Gehäuseinnenraums für die Platzierung der Zahnräder und Wellen,
insbesondere welcher von beiden Formwerkzeugen beabstandet ist. Von Vorteil ist dabei, dass mittels dieser Formwerkzeuge die abtreibende Seite, die dazu gegenüberliegende Seite und der Gehäuseinnenraum ausformbar sind. Somit ist die entsprechende Seite des äußeren Rahmens des Getriebes sehr steif ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

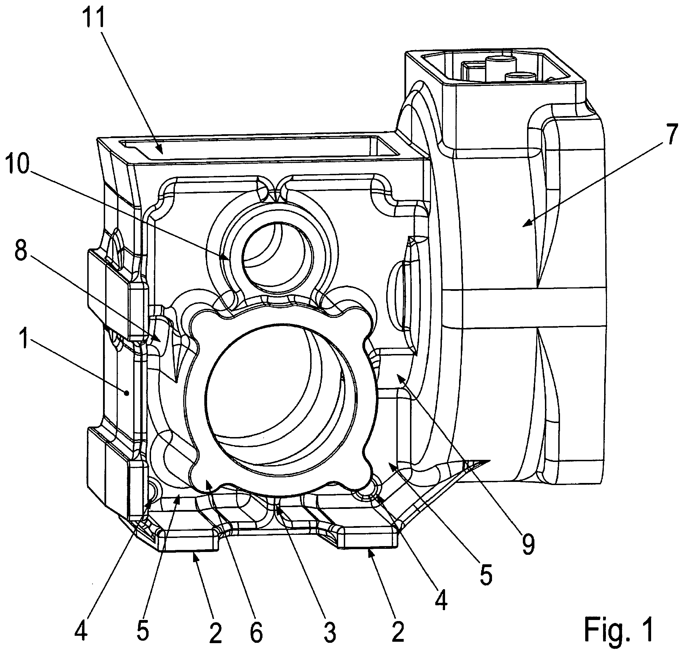

In der Figur 1 ist ein Gehäuseteil 1 eines erfindungsgemäßen Getriebes in Schrägansicht dargestellt, wobei Knockouts 4 sichtbar sind.

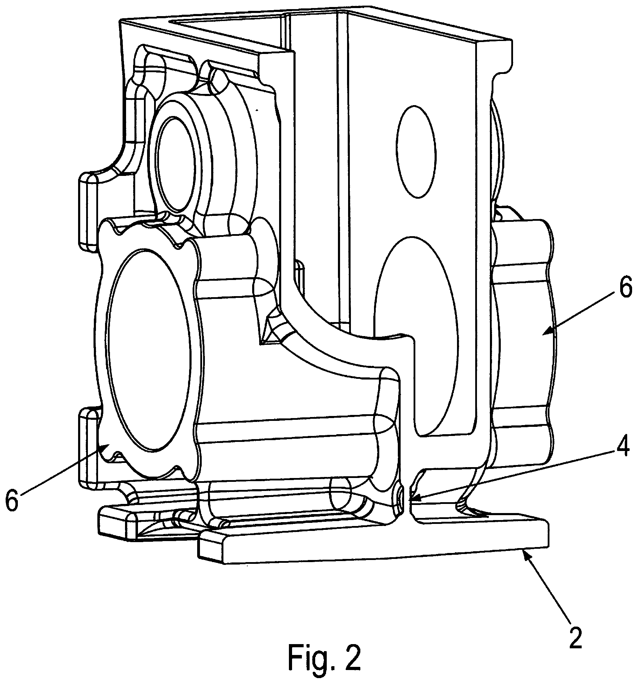

In der Figur 2 ist das Gehäuseteil 1 angeschnitten dargestellt.
In der Figur 3 ist ein Querschnitt durch einen Bereich des Gehäuseteils 1 dargestellt.

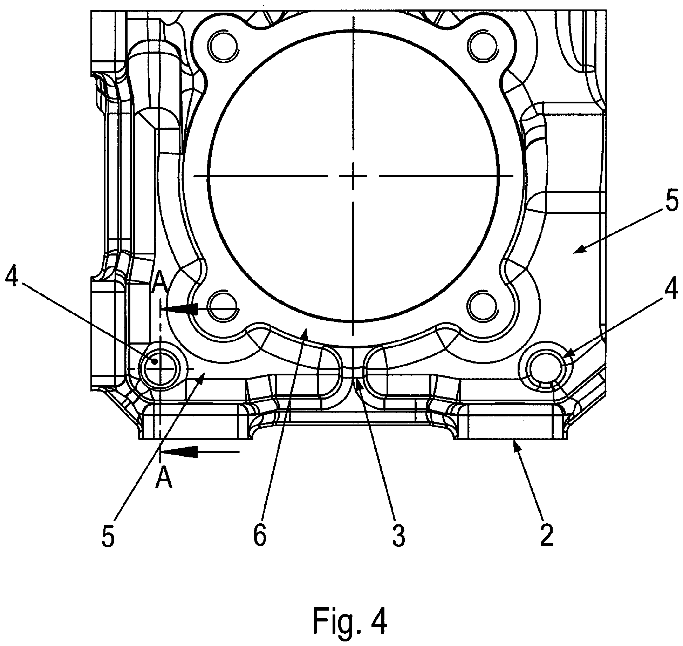

In der Figur 4 ist eine Seitensicht auf das Gehäuseteil 1 dargestellt.

Wie in den Figuren dargestellt, weist das Gehäuseteil 1 einen Flanschbereich 7 auf, an welchem das Gehäuse eines Elektromotors verbindbar ist. Die Rotorwelle des Elektromotors ist drehfest mit dem eintreibenden Verzahnungsteil des Getriebes verbunden.

Das Gehäuseteil 1 ist mittels Druckguss hergestellt und fungiert als Gehäuseteil eines Winkelgetriebes. Vorzugsweise wird das Gehäuseteil 1 als Aluminium-Druckgussteil hergestellt.

Das Druckgussteil wird nach Einspritzen des geschmolzenen Gießwerkstoffs, insbesondere Aluminium, mittels Schiebern entformt, welche jeweils geradlinig bewegt, insbesondere herausgezogen, werden.

Insbesondere entformt ein drittes Formwerkzeug in einer zur ersten Ziehrichtung zweier Formwerkzeuge den vom Flanschbereich 7 umgebenen Innenraum in Richtung der Rotorwellenachse. Das dritte Formwerkzeug wird also in Rotorwellenachs-Richtung herausgezogen.

insbesondere entformt ein viertes Formwerkzeug den von der Deckelöffnung 11 umgebenen Innenraum senkrecht zur abtreibenden Wellenachse und senkrecht zur Rotorwellenachse.

Das erste und zweite Fomwerkzeug entformen senkrecht zur Rotorwellenachs-Richtung. Dabei wird das erste Formwerkzeug in Richtung der abtreibenden Welle herausgezogen und das zweite Formwerkzeug in entgegengesetzter Richtung.

Eine als Beabstandung der beiden Formwerkzeuge fungierende Zwischenwand 5 ist als vor dem Herausziehen der beiden Formwerkzeuge befüllter Zwischenraum zwischen den beiden Formwerkzeugen erzeugt. Die Zwischenwand 5 ist im Wesentlichen eben ausgeführt. Die Normalenrichtung dieser Ebene ist parallel zur Richtung der abtreibenden Welle ausgerichtet.

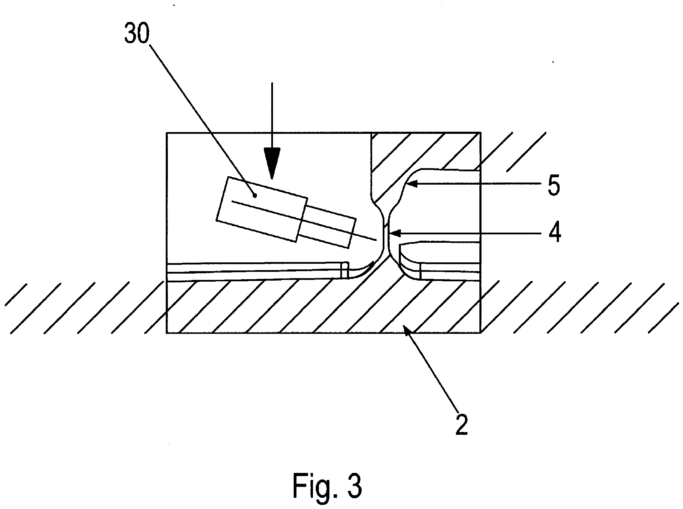

Ein jeweiliges Knockout 4, insbesondere also der Bereich der Zwischenwand 5 mit verdünnter Wandstärke, ist innerhalb der Zwischenwand 5 angeordnet. Auf diese Weise ist, wie in Figur 3 dargestellt, dieses Knockout 4 mit einem Werkzeug 30 durchbrechbar, insbesondere mittels Klopfen oder Schlagen. Auf diese Weise ist bei einer Montageanordnung des Getriebes, bei welcher die Zwischenwand 5 als Boden einer wannenförmigen Vertiefung, insbesondere taschenförmigen Vertiefung, fungiert, der Abfluss von Wasser durch das durchgebrochene Knockout 4 hindurch ermöglicht.

Der jeweilige Knockout 4 ähnelt einem Gießblatt, da seine Wandstärke geringer ist als die Wandstärke der Zwischenwand 5. Insbesondere ist die Wandstärke des Knockouts 4 geringer als ein Millimeter.

Die Normalenrichtung der ebenen Zwischenwand ist parallel zur Richtung der abtreibenden Welle, deren Lager in der am Gehäuseteil 1 ringförmig ausgeformten Lageraufnahme 6 aufgenommen wird.

Die Lageraufnahme weist bezogen auf die Drehachse der abtreibenden Welle radial gerichtete Verbreiterungen auf, die in Umfangsrichtung voneinander regelmäßig beabstandet sind und in welche axial gerichtete Bohrungen eingebracht sind.

Die Rippe 3 erstreckt sich in Richtung der abtreibenden Welle des Getriebes. Somit ist eine steife Anbindung der Lageraufnahme 6 des Lagers der abtreibenden Welle an den äußeren Rahmen des Gehäuseteils 1 erreicht.

Der äußere Rahmen ist aus einer Unterseite, einer eine Deckelöffnung 11 aufweisende Oberseite, einer ersten Seitenfläche und dem Flanschbereich 7 als zweiter Seitenfläche eines grob gesehen quaderförmigen Gehäuseteils 1 gebildet.

Der äußere Rahmen ist verdickt ausgeführt. Allerdings wäre er für sich alleine genommen nicht belastbar mit Scherkräften, welche parallel zur Achse der eintreibenden Welle ausgerichtet sind.

Die Zwischenwand 5 ist nur dünn ausgeführt und versteift den äußeren Rahmen nur geringfügig.

Zur Versteifung ist vorrangig ein kreuzartiges Gebilde vorgesehen, wobei die vier Endbereiche der Extremitäten des Kreuzes jeweils mittig in einer der Seitenflächen des quaderförmigen Gehäuseteils verbunden sind mit dem äußeren Rahmen. Somit ist eine Stabilisierung des Gehäuseteils 1 erreicht.

Zur Bildung des Kreuzes ist die mittig angeordnete Lageraufnahme 6 mittels einer weiteren Lageraufnahme, welche ein Lager einer Zwischenwelle des Getriebes aufnimmt, mit der Oberseite verbunden.

Mit der Unterseite ist die Lageraufnahme 6 über die Rippe 3 verbunden.

Mittels eines ersten Verdickungsbereichs 8, insbesondere Stegbereich, ist die Lageraufnahme 6 mit der Seitenfläche verbunden.

Mittels eines zweiten Verdickungsbereichs 9, insbesondere Stegbereich, ist die Lageraufnahme 6 mit dem Flanschbereich 7 verbunden.

Die Unterseite und die Seitenfläche weisen jeweils Fußbereiche 2 auf, welche an ihrer Außenseite plan bearbeitet sind. Somit ist das Getriebe entweder mittels seiner Unterseite an einer Platte befestigbar oder aufstellbar auf eine Platte. Alternativ ist aber auch ein Befestigen oder Aufstellen der Seitenfläche an der Platte ausführbar, wobei dann eine andere Montageausrichtung des Getriebes erreichbar ist.

Da die Verdickungsbereiche 8, 9, die weitere Lageraufnahme 10 und die Rippe 3 sich axial erstrecken, ist eine hohe Steifigkeit erreichbar.

Durch das Herausziehen des ersten Formwerkzeugs entsteht also eine wannenförmige Vertiefung, deren Boden die Zwischenwand 5 bildet und deren Wände durch den äußeren Rahmen gebildet sind.

Ebenso entsteht durch das Herausziehen des zweiten Formwerkzeugs an der gegenüberliegenden Seite ebenfalls eine wannenförmige Vertiefung, deren Boden die Zwischenwand 5 bildet und deren Wände durch den äußeren Rahmen gebildet sind.

Beim Druckgießen sind also die beiden Formwerkzeuge voneinander beabstandet und berühren sich nicht. Dadurch ist einerseits die Zwischenwand 5 gebildet und mit Material gefüllt. Andererseits ist somit eine direkte Berührung der beiden Fomwerkzeuge vermieden, so dass erhöhte Abnutzung von ansonsten vorhandenen Kontaktflächen der beiden Fomwerkzeuge vermeidbar ist. Denn bei einer Berührung der beiden Fomwerkzeuge wäre eine erhöhte Abnutzung bewirkt. Die Zwischenwand 5 verhindert also diese erhöhte Abnutzung.

Mittels der Knockouts 4 sind durch die Zwischenwand 5 durchgehende Ausnehmungen in einfacher Weise herstellbar.

Die Zwischenwand 5 hat außerhalb der Knockouts eine Wandstärke, welche größer als ein Millimeter ist, insbesondere kleiner als zehn Millimeter.

### Bezugszeichenliste

1 Gehäuseteil
2 Fußbereich
3 Rippe
4 Knockout, insbesondere Bereich der Zwischenwand 5 mit verdünnter Wandstärke, insbesondere Gießblatt
5 Zwischenwand, insbesondere zur Beabstandung der beiden Formwerkzeuge
6 Lageraufnahme
7 Flanschbereich
8 Verdickungsbereich
9 Verdickungsbereich
10 weitere Lageraufnahme, insbesondere für Zwischenwelle des Getriebes
11 Deckelöffnung
30 Werkzeug

## Patentansprüche

1. Getriebe mit Gehäuseteil (1),
wobei das Gehäuseteil (1) ein Gussteil ist, insbesondere ein Druckgussteil, insbesondere ein Aluminium-Druckgussteil,
**wobei** das Gehäuseteil (1) durch zwei Formwerkzeuge erzeugt ist, welche beim Entformen in einer ersten Ziehrichtung relativ auseinander bewegt werden,
wobei das Gehäuseteil (1) eine Zwischenwand (5), **die eine Beabstandung der beiden Formwerkzeuge bewirkt,** aufweist,
wobei das Gehäuseteil (1) eine sich in Ziehrichtung erstreckende Rippe (3) aufweist, welche eine Lageraufnahme (6) eines Lagers der abtreibenden Welle des Getriebes mit einer Unterseite eines äußeren Rahmens des Gehäuseteils (1) verbindet,
wobei die Lageraufnahme (6) mittels einer weiteren Lageraufnahme (10), welche ein Lager einer Zwischenwelle des Getriebes aufnimmt, mit der Oberseite des äußeren Rahmens verbunden ist,
wobei in der Zwischenwand räumlich begrenzte Verjüngungen, die als Knockout fungieren, ausgeformt sind und zum Entfernen, nämlich Herausschlagen, vorgesehen sind,
**wobei die Zwischenwand (5) eben ausgeformt ist und die Ziehrichtung parallel zur Normalenrichtung der Ebene,** Mittelebene, **der Zwischenwand (5) ausgerichtet ist,**
**wobei die Lageraufnahme (6) mittels eines Verdickungsbereichs mit einer Seitenfläche des äußeren Rahmens verbunden ist,** wobei die Lageraufnahme (6) mittels eines Flanschbereichs (7) mit einer Seitenfläche des äußeren Rahmens verbunden ist, wobei der Flanschbereich (7) zum Verbinden mit einem Gehäuse eines die eintreibende Welle des Getriebes antreibenden Elektromotors, vorgesehen ist, und
**dadurch gekennzeichnet, dass**
**wobei das Getriebe ein Winkelgetriebe ist,**
wobei an der ersten Seite der Zwischenwand (5) eine wannenförmige Vertiefung ausgebildet ist, deren Boden die Zwischenwand (5) bildet und deren Wände durch den äußeren Rahmen gebildet sind,
wobei an der zur ersten Seite der Zwischenwand (5) gegenüberliegenden Seite ebenfalls eine wannenförmige Vertiefung ausgebildet ist, deren Boden die Zwischenwand (5) bildet und deren Wände durch den äußeren Rahmen gebildet sind.

2. Getriebe nach Anspruch 1,
**dadurch gekennzeichnet, dass**
**zur Verringerung der Abnutzung der beiden Formwerkzeuge** die Wandstärke der Zwischenwand (5) zwischen einem und zehn Millimetern beträgt.

3. Getriebe nach mindestens einem der vorangegangenen Ansprüche,
**dadurch gekennzeichnet, dass**
**die senkrechte Projektion des Rahmens in Richtung der Ziehrichtung im Wesentlichen rechteckförmig ist.**

4. Verfahren zum Herstellen eines Getriebes **nach mindestens einem der vorangegangenen Ansprüche,**
wobei das Getriebe ein Gehäuseteil (1) aufweist, das als Druckgussteil aus einem Gussmaterial, insbesondere Aluminium, gefertigt wird,
**wobei** zwischen zwei Formwerkzeugen, insbesondere beim Druckgießen des Gehäuseteils (1), Gussmaterial als Zwischenwand (5), insbesondere zur Beabstandung der beiden Formwerkzeuge, angeordnet ist, insbesondere mit einer Wandstärke zwischen 1 und 10 Millimeter,
wobei an der Zwischenwand (5) voneinander beabstandete Knockouts (4), angeordnet sind, also Bereiche mit einer Wandstärke, die geringer ist als die Wandstärke der Zwischenwand (5) außerhalb der Knockouts (4),
wobei beim Entformen die beiden Formwerkzeuge in einer ersten Ziehrichtung relativ auseinander bewegt werden,
insbesondere wobei die erste Ziehrichtung parallel zur Drehachse der abtreibenden Welle des Getriebes gerichtet ist,
**dadurch gekennzeichnet, dass**
**nach dem Herausziehen der Formwerkzeuge die an der Zwischenwand (5) angeordneten Knockouts (4) entfernt, nämlich herausgeschlagen, werden**
**wobei durch das Herausziehen des ersten Formwerkzeugs eine wannenförmige Vertiefung entsteht, deren Boden die Zwischenwand (5) bildet und deren Wände durch den äußeren Rahmen gebildet sind,**
**wobei durch das Herausziehen des zweiten Formwerkzeugs an der gegenüberliegenden Seite ebenfalls eine wannenförmige Vertiefung entsteht, deren Boden die Zwischenwand (5) bildet und deren Wände durch den äußeren Rahmen gebildet sind.**

5. Verfahren nach Anspruch 4,
**dadurch gekennzeichnet, dass**
beim Entformen des als Druckgussteil hergestellten Gehäuseteils (1) ein drittes Formwerkzeug senkrecht zur ersten Ziehrichtung herausgezogen wird, insbesondere zur Erzeugung der Lageraufnahme (6) für ein Lager der eintreibenden Welle,
insbesondere wobei das dritte Formwerkzeug von den beiden Formwerkzeugen beabstandet ist.

6. Verfahren nach Anspruch 4 oder 5,
**dadurch gekennzeichnet, dass**
beim Entformen des Gehäuseteils (1) ein viertes Formwerkzeug senkrecht zur ersten Ziehrichtung herausgezogen wird, insbesondere zur Erzeugung des Gehäuseinnenraums für die Einführung der Zahnräder und Wellen beim Einbau derselben ins Gehäuseteil (1),
insbesondere das vierte Formwerkzeug und/oder der Gehäuseinnenraum von beiden Formwerkzeugen beabstandet ist oder sind.

7. Verfahren nach Anspruch 6,
**dadurch gekennzeichnet, dass**
das vierte Formwerkzeug den durch die Deckelöffnung (11) des Gehäuseteils (1) zugänglichen Gehäuseinnenraum senkrecht zur abtreibenden Wellenachse und senkrecht zur Rotorwellenachse entformt.

## Claims

1. A gear unit with housing part (1),
wherein the housing part (1) is a casting, in particular a die casting, in particular an aluminium die casting,
wherein the housing part (1) is created by two forming dies which during demoulding are moved relatively apart from each other in a first drawing direction,
wherein the housing part (1) has a partition (5) which brings about spacing-apart of the two forming dies,
wherein the housing part (1) has a rib (3) extending in the drawing direction which connects a bearing receptacle (6) of a bearing of the output shaft of the gear unit to an underside of an outer frame of the housing part (1),
wherein the bearing receptacle (6) is connected, by means of a further bearing receptacle (10) which receives a bearing of an intermediate shaft of the gear unit, to the upper side of the outer frame,
wherein spatially limited tapered portions which act as knock-outs are formed in the partition and are provided for removal, namely knocking out,
wherein the partition (5) is formed flat and the drawing direction is oriented parallel to the normal direction of the plane of the partition (5),
wherein the bearing receptacle (6) is connected by means of a thickened region to a side face of the outer frame, wherein the bearing receptacle (6) is connected by means of a flange region (7) to a side face of the outer frame, wherein the flange region (7) is provided for connecting to a housing of an electric motor which drives the input shaft of the gear unit, and
**characterised in that**
with the gear unit being a right-angled gear unit,
with a trough-shaped depression being formed on the first side of the partition (5), the base of which depression forms the partition (5) and the walls of which are formed by the outer frame,
with a trough-shaped depression likewise being formed on the side located opposite the first side of the partition (5), the base of which depression forms the partition (5) and the walls of which are formed by the outer frame.

2. A gear unit according to claim 1,
**characterised in that**
in order to reduce the wear on the two forming dies the wall thickness of the partition (5) is between one and ten millimetres.

3. A gear unit according to at least one of the preceding claims,
**characterised in that**
the perpendicular projection of the frame in the direction of the drawing direction is substantially rectangular.

4. A method for producing a gear unit according to at least one of the preceding claims,
wherein the gear unit has a housing part (1) which is manufactured as a die casting from a cast material, in particular aluminium,
wherein between two forming dies, in particular when die casting the housing part (1), cast material is arranged as a partition (5), in particular for spacing apart the two forming dies, in particular with a wall thickness of between 1 and 10 millimetres,
wherein knock-outs (4) which are spaced apart from each other are arranged on the partition (5), i.e. regions with a wall thickness which is less than the wall thickness of the partition (5) outside the knock-outs (4),
wherein during demoulding the two forming dies are moved relatively apart from each other in a first drawing direction,
in particular wherein the first drawing direction is directed parallel to the axis of rotation of the output shaft of the gear unit,
**characterised in that**
once the forming dies have been withdrawn the knock-outs (4) arranged on the partition (5) are removed, namely knocked out,
wherein, due to the withdrawing of the first forming die, a trough-shaped depression results, the base of which forms the partition (5) and the walls of which are formed by the outer frame,
wherein, due to the withdrawing of the second forming die, on the opposite side likewise a trough-shaped depression results, the base of which forms the partition (5) and the walls of which are formed by the outer frame.

5. A method according to claim 4,
**characterised in that**
during demoulding of the housing part (1) which is produced as a die casting a third forming die is withdrawn perpendicularly to the first drawing direction, in particular to create the bearing receptacle (6) for a bearing of the input shaft,
in particular with the third forming die being spaced apart from the two forming dies.

6. A method according to claim 4 or 5,
**characterised in that**
during demoulding of the housing part (1) a fourth forming die is withdrawn perpendicularly to the first drawing direction, in particular to create the housing interior for the introduction of the gear wheels and shafts when installing the same in the housing part (1),
in particular the fourth forming die and/or the housing interior is or are spaced apart from both forming dies.

7. A method according to claim 6,
**characterised in that**
the fourth forming die demoulds the housing interior which is accessible through the cover opening (11) in the housing part (1) perpendicularly to the output shaft axis and perpendicularly to the rotor shaft axis.

## Revendications

1. Transmission munie d'une partie (1) formant carter,
laquelle partie (1) formant carter est une pièce venue de coulée, en particulier une pièce venue de coulée sous pression, notamment une pièce en aluminium coulé sous pression, ladite partie (1) formant carter étant produite par deux outils de moulage qui, au stade du démoulage, sont animés d'un mouvement relatif les dissociant l'un de l'autre dans une première direction de traction,
ladite partie (1) formant carter comportant une paroi intermédiaire (5) qui provoque un espacement mutuel des deux outils de moulage,
ladite partie (1) formant carter étant dotée d'une nervure (3) qui s'étend dans la direction de la traction et qui relie un logement (6) d'un palier de l'arbre de sortie de la transmission à une face inférieure d'un encadrement extérieur de ladite partie (1) formant carter,
ledit logement (6) de palier étant relié à la face supérieure dudit encadrement extérieur, au moyen d'un logement supplémentaire (10) recevant un palier d'un arbre intermédiaire de ladite transmission,
sachant que des rétrécissements à délimitation spatiale, façonnés dans la paroi intermédiaire, remplissent la fonction de zones défonçables et sont voués à l'élimination, à savoir à l'expulsion par impact,
sachant que la paroi intermédiaire (5) est de configuration plane, et que la direction de la traction est orientée parallèlement à la direction normale au plan de ladite paroi intermédiaire (5),
sachant que le logement (6) de palier est relié à une surface latérale de l'encadrement extérieur au moyen d'une région épaissie, ledit logement (6) de palier étant relié à une surface latérale dudit encadrement extérieur au moyen d'une zone de bridage (7), laquelle zone de bridage (7) est prévue pour la liaison avec un carter d'un moteur électrique entraînant l'arbre d'entrée de ladite transmission,
**caractérisée par le fait que**
la transmission est une transmission à renvoi d'angle,
un renfoncement en forme d'auge, dont le fond matérialise la paroi intermédiaire (5) et dont les parois sont formées par l'encadrement extérieur, étant façonné du premier côté de ladite paroi intermédiaire (5),
un renfoncement en forme d'auge, dont le fond matérialise ladite paroi intermédiaire (5) et dont les parois sont formées par ledit encadrement extérieur, étant pareillement façonné du côté tourné à l'opposé dudit premier côté de ladite paroi intermédiaire (5).

2. Transmission selon la revendication 1,
**caractérisée par le fait que**
l'épaisseur de la paroi intermédiaire (5) mesure entre un et dix millimètres, en vue de réduire l'usure des deux outils de moulage.

3. Transmission selon au moins l'une des revendications précédentes,
**caractérisée par le fait que**
la projection verticale de l'encadrement, pointant dans la direction de la traction, est pour l'essentiel rectangulaire.

4. Procédé de fabrication d'une transmission conforme à au moins l'une des revendications précédentes,
ladite transmission étant munie d'une partie (1) formant carter, produite en tant que pièce venue de coulée sous pression en un matériau de coulée, de l'aluminium en particulier,
sachant que, notamment lors de la coulée sous pression de ladite partie (1) formant carter, du matériau de coulée est interposé entre deux outils de moulage en tant que paroi intermédiaire (5) présentant, en particulier, une épaisseur comprise entre 1 et 10 millimètres, notamment en vue d'espacer les deux outils de moulage,
sachant que la paroi intermédiaire (5) comporte des zones défonçables (4) mutuellement espacées, c'est-à-dire des régions pourvues d'une épaisseur de paroi moindre que l'épaisseur de ladite paroi intermédiaire (5) à l'extérieur desdites zones défonçables (4),
les deux outils de moulage étant animés, au stade du démoulage, d'un mouvement relatif les dissociant l'un de l'autre dans une première direction de traction,
laquelle première direction de traction est notamment orientée parallèlement à l'axe de rotation de l'arbre de sortie de ladite transmission,
**caractérisé par le fait que**
les zones défonçables (4) situées au niveau de la paroi intermédiaire (5) sont éliminées, à savoir expulsées par impact à l'issue de l'extraction des outils de moulage,
l'extraction du premier outil de moulage donnant alors naissance à un renfoncement en forme d'auge dont le fond matérialise la paroi intermédiaire (5), et dont les parois sont formées par l'encadrement extérieur,
l'extraction du deuxième outil de moulage donnant pareillement naissance, du côté tourné à l'opposé, à un renfoncement en forme d'auge dont le fond matérialise ladite paroi intermédiaire (5) et dont les parois sont formées par ledit encadrement extérieur.

5. Procédé selon la revendication 4,
**caractérisé par le fait**
**qu'**un troisième outil de moulage est extrait perpendiculairement à la première direction de traction au stade du démoulage de la partie (1) formant carter, produite en tant que pièce venue de coulée sous pression, en particulier afin de créer le logement (6) affecté à un palier de l'arbre d'entrée,
lequel troisième outil de moulage est notamment situé à distance des deux outils de moulage.

6. Procédé selon la revendication 4 ou 5,
**caractérisé par le fait**
**qu'**un quatrième outil de moulage est extrait perpendiculairement à la première direction de traction lors du démoulage de la partie (1) formant carter, notamment afin de créer l'espace interne du carter, en vue de l'insertion des roues dentées et des arbres au stade de l'intégration de ces derniers dans ladite partie (1) formant carter,
sachant, en particulier, que ledit quatrième outil de moulage et/ou ledit espace interne du carter est (sont) situé(s) à distance des deux outils de moulage.

7. Procédé selon la revendication 6,
**caractérisé par le fait que**
le quatrième outil de moulage démoule l'espace interne du carter, accessible à travers l'ouverture (11) du couvercle de la partie (1) formant carter, perpendiculairement à l'axe de l'arbre de sortie et perpendiculairement à l'axe de l'arbre rotorique.
